# EUROPÄISCHE PATENTSCHRIFT

(11) **EP 3 232 982 B1**
(45) Veröffentlichungstag und Bekanntmachung des Hinweises auf die Patenterteilung: **01.04.2020**
(21) Anmeldenummer: 15823151.4
(22) Anmeldetag: 18.12.2015
(51) Int. Cl.: A61C 8/00, A61C 13/00, A61C 9/00

(54) **ERMITTELN DER RÄUMLICHEN POSITIONEN UND ORIENTIERUNGEN VON IN EINEM KIEFER EINES PATIENTEN VERANKERTEN IMPLANTATEN**
ASCERTAINING THE SPATIAL POSITIONS AND ORIENTATIONS OF IMPLANTS ANCHORED IN A JAW OF A PATIENT
DÉTERMINATION DES POSITIONS ET ORIENTATIONS SPATIALES D'IMPLANTS ANCRÉS DANS UNE MÂCHOIRE D'UN PATIENT

(30) Priorität: 18.12.2014 DE 102014226497
(43) Veröffentlichungstag der Anmeldung: 25.10.2017
(73) Patentinhaber: Sirona Dental Systems GmbH, 64625 Bensheim (DE)
(72) Erfinder: SCHNITZSPAN, Paul, 60594 Frankfurt (DE); WEDLER, Volker, 69493 Hirschberg (DE)
(74) Vertreter: Özer, Alpdeniz
(86) Internationale Anmeldenummer: PCT/EP2015/080466
(87) Internationale Veröffentlichungsnummer: WO 2016/097279

(56) Entgegenhaltungen:
- WO-A1-2014/144098
- WO-A2-2004/100822
- US-A- 5 350 297
- US-A1- 2002 106 610
- US-A1- 2003 082 499
- US-A1- 2013 172 731

## Beschreibung

### Gebiet der Erfindung

Die Erfindung betrifft ein Verfahren zum Ermitteln der räumlichen Positionen und Orientierungen relativ zueinander von mindestens zwei in einem Kiefer eines Patienten verankerten Implantaten. Eine Einklebehilfe zum Überbrücken von mindestens zwei in einem Kiefer eines Patienten verankerten Implantaten, ein System zum Ermitteln der räumlichen Positionen und Orientierungen relativ zueinander von mindestens zwei in einem Kiefer eines Patienten verankerten Implantaten, ein zugehöriges Computerprogramm sowie eine Vorrichtung zum Herstellen der Einklebehilfe ist in der Zahntechnik bei der Herstellung von Restaurationen bzw. Zahnersatz, die bzw. der von mehreren Implantaten getragen wird, von Bedeutung.

### Stand der Technik

Zahnersatz, welcher von Implantaten getragen wird, muss sehr genau auf diese Implantate passen, da sich in eventuell vorhandenen Zwischenräumen zwischen Implantat und Zahnersatz Keime festsetzen können, welche zu Entzündungen führen können (Peri-Implantitis) . Bei der Herstellung des Zahnersatzes gibt es einige Fehlerquellen, die hierfür relevant sind:
- Bei der Abdrucknahme und Herstellung eines Gipsmodells (Meister-Modell) zur Anpassung einer zu erstellenden Restauration durch einen Zahntechniker entstehen systembedingt Übertragungsfehler, die je nach Gründlichkeit des behandelnden Zahnarztes und der verwendeten Materialien größer oder kleiner ausfallen.
- Beim Einscannen des Meister-Modells zur Erstellung von Restaurationen mittels CAD/CAM kann es zu zusätzlichen Fehlern und Ungenauigkeiten kommen. Durch Verwendung spezieller Scanner mit besonders hoher Genauigkeit lassen sich diese Fehler allerdings minimieren.
- Eine alternative Vorgehensweise, bei der mittels eines Intra-Oral-Scans ein virtuelles Meister-Modell erstellt wird, verursacht ebenfalls Ungenauigkeiten, insbesondere durch die technischen Beschränkungen der verfügbaren Intra-Oral-Scan-Technologie.

Bei der Erstellung von Restaurationen, die jeweils auf ein einzelnes Implantat montiert werden, lässt sich trotzdem relativ gut sicherstellen, dass die Restauration genau auf das Implantat passt.

Bei mehrgliedrigen implantatgetragenen Restaurationen, d.h. Restaurationen, die auf mehr als ein Implantat montiert werden, haben diese Fehler jedoch gravierendere Auswirkungen. Hierbei kommt es nämlich auf die genaue relative Position und insbesondere auch die relative Orientierung der Implantate an, damit keine Spalte zwischen den Implantaten und der Restauration entstehen können. In einem solchen Fall muss die Restauration ggf. sogar komplett neu erstellt werden. Viele Zahnlabore sind daher dazu übergegangen, nur noch den Sitz auf dem Meistermodell zu gewährleisten und keine Garantie für den Sitz im Mund des Patienten zu übernehmen.

Verfahren zur Ermittlung der räumlichen Positionen und Orientierungen von mindestens zwei in einem Kiefer eines Patienten verankerten Implantaten sind beispielsweise aus der US 5,350,297 A und der WO 2004/100822 A2 bekann.

Die WO 2014/144098 A1 offenbart eine Vorrichtung zur Nachfertigung von beliebigen Objekten mittels 3D-Druck.

### Aufgabe

Aufgabe der Erfindung ist es, die Übertragungs- und Scanfehler bei lmplantatversorgungen mit mehr als einem Implantat zu minimieren.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Vorgeschlagen wird ein Verfahren zum Ermitteln der räumlichen Positionen und Orientierungen relativ zueinander von mindestens zwei in einem Kiefer eines Patienten verankerten Implantaten mit folgenden Schritten:
1. Herstellen eines Verbindungsstücks (Einklebehilfe), das die Implantate überbrückt; wobei die Einklebehilfe derart ausgebildet wird, dass die Einklebehilfe Negativformen von Anschlussstücken (Klebekappen) aufweist, wobei die Negativformen in der Einklebehilfe derart angeordnet werden, dass sie auf die Klebekappen passen, wenn die Klebekappen auf den Implantaten lösbar fixiert sind, und wobei die Negativformen in der Einklebehilfe ferner derart ausgebildet werden, dass sie einen Spielraum zwischen den Negativformen und den Klebekappen lassen. Wichtig ist hierbei, dass die Einklebehilfe starr ist und sich nicht verbiegen lässt. Die Einklebehilfe muss dabei nicht extrem präzise, sondern lediglich ungefähr auf die Implantate passen, die Negativformen müssen also nicht genau die kegelförmige Gestalt der Klebekappen aufweisen, sondern können alternativ z.B. zylindrisch gestaltet sein. Der Spielraum muss dabei so groß sein, dass er die ggf. vorhandene Formungenauigkeit der Einklebehilfe ausgleichen kann.
2. Die Klebekappen werden im Kiefer des Patienten auf den mindestens zwei Implantaten lösbar fixiert. Dies geschieht z.B. dadurch, dass sie mittels einer Schraube entweder direkt auf die Implantate geschraubt werden oder auf ggf. vorhandene Abutments auf den Implantaten.
3. Die Einklebehilfe wird im Patientenmund über die Klebekappen positioniert. Dank des großen Spielraums passt die Einklebehilfe in jedem Fall, und der Zahnarzt hat Platz zum Hantieren.
4. Der Spielraum zwischen den Klebekappen und den Negativformen wird mit dentalem Klebstoff aufgefüllt.
5. Der Klebstoff wird ausgehärtet.
6. Die Klebekappen werden von den Implantaten oder den ggf. vorhandenen Abutments gelöst.
7. Die Einklebehilfe mit den an ihr klebenden Klebekappen wird aus dem Patientenmund entfernt. Diese Teile bilden den sog. Klebeschlüssel.

Damit liegt ein Klebeschlüssel vor, der die richtigen Abstände und insbesondere Orientierungen der Implantate zueinander starr beinhaltet. Anhand dieses Klebeschlüssels lässt sich bei der Herstellung von Restaurationen, die auf mehreren Implantaten sitzen, sicherstellen, dass die Implantatanordnung im Mund des Patienten korrekt übertragen wird.

Wenn der Zahntechniker, der die Restauration erstellt, mit traditionellen Verfahren arbeitet, werden zuvor folgende Schritte durchgeführt:
1.Erstellen eines Meister-Modells mit Labor-Analogen oder Implantaten.
2.Fixieren von Scanbodys auf den Labor-Analogen oder Implantaten. Diese sind typischerweise pyramidenförmig und ermöglichen es einem Scanner, zumindest grob Position und Orientierung der Labor-Analoge oder Implantate zu erfassen.
3.Scannen des Meister-Modells.
4. Erstellen eines virtuellen dreidimensionalen Modells aus den gescannten Daten. Die Einklebehilfe wird dann ausgehend von diesem virtuellen, dreidimensionalen Modell mittels CAD/CAM erstellt.

Arbeitet der Zahntechniker - und der behandelnde Zahnarzt - hingegen vorzugsweise digital, werden zuvor folgende Schritte durchgeführt:
1. Fixieren von Scanbodys auf den Implantaten im Mund des Patienten.
2.Durchführen eines Intra-Oral-Scans.
3. Erstellen eines virtuellen dreidimensionalen Modells aus den gescannten Daten. Damit liegt ein virtuelles Meister-Modell vor. Die Einklebehilfe wird dann ausgehend von diesem virtuellen, dreidimensionalen Modell mittels CAD/CAM erstellt. Vorteilhaft ist hierbei insbesondere, dass in der Regel ein Zahnarztbesuch eingespart werden kann.

Bevorzugt beträgt der Spielraum zwischen den Klebekappen und den Negativformen zwischen 100 und 300 µm.

Günstig ist es, wenn die Negativformen in der Einklebehilfe in okklusaler Richtung jeweils ein Loch zum Aufnehmen des dentalen Klebstoffs und zum Lösen der Klebekappen aufweisen. Dadurch wird ermöglicht, den Klebstoff hinzuzufügen, nachdem die Einklebehilfe auf den Klebekappen positioniert wurde, was insbesondere auch die Dosierung des Klebstoffes erleichtert. Ein Kanal von dem Loch zu der Schraube, mit der die jeweilige Klebekappe am zugehörigen Implantat fixiert ist, kann dabei entweder mittels eines Wachsstiftes freigehalten werden, oder dieser Kanal wird im Anschluss freigebohrt, um die Schraube lösen zu können.

Bei einer vorteilhaften Weiterbildung sind auf den Implantaten Multi-Unit-Abutments lösbar fixiert, an denen ihrerseits die Klebekappen lösbar fixiert werden können.

Die Lage und Orientierung relativ zu benachbarten Zähnen wird dadurch sichergestellt, dass bei vorhandenen Nachbarzähnen in der Einklebehilfe eine Negativform von den Okklusalflächen der Nachbarzähne vorgesehen wird. Mit diesen Negativformen wird die Einklebehilfe auf den Nachbarzähnen abgestützt.

Ein zweites Meister-Modell, das die oben erwähnten Ungenauigkeiten in Bezug auf die Position und Orientierung der Implantate vermeidet, erhält man dadurch, dass im Anschluss folgende Schritte durchgeführt werden:
1. Labor-Analoge oder Implantate werden an den an der Einklebehilfe klebenden Klebekappen lösbar fixiert. Sie sind damit in korrektem Abstand zueinander und mit der korrekten Orientierung angeordnet.
2. Ein Modell wird erzeugt, das die Labor-Analoge oder Implantate umfasst. Dies geschieht z.B. dadurch, dass die Labor-Analoge oder Implantate in eine Gipsbasis eingegossen werden. Der genaue Gingiva-Verlauf muss hierbei nicht unbedingt modelliert werden.
3. Die Klebekappen werden von den Labor-Analogen oder Implantaten gelöst, welche in dem Modell verbleiben.

Soll das zweite Meister-Modell virtuell vorliegen, z.B. weil die Restauration mittels CAD/CAM erstellt werden soll, werden stattdessen im Anschluss folgende Schritte durchgeführt:
1. Die Einklebehilfe mit den an ihr klebenden Klebekappen wird mit hoher Genauigkeit gescannt. Hierzu wird ein geeigneter Extra-Oral-Scanner verwendet, wobei eine Einzelbildgenauigkeit von zwischen 5 und 30 µm erreicht werden sollte.
2. Aus den gescannten Daten wird ein virtuelles dreidimensionales Modell erstellt.

Dabei kann ein Datenträger erstellt werden, auf dem die gewonnenen Daten gespeichert sind.

Die Aufgabe wird auch gelöst durch ein Verfahren zum Erstellen eines Zahnersatzes, der im Patientenmund mittels mindestens zweier bereits vorhandener Implantate verankert werden soll. Dabei werden zunächst die räumlichen Positionen und Orientierungen der mindestens zwei bereits vorhandenen Implantate relativ zueinander ermittelt. Dieser Schritt wird wie oben bereits beschrieben durchgeführt. Dann wird der Zahnersatz ausgehend von den ermittelten Positionen und Orientierungen erstellt. Der so erhaltene Zahnersatz passt genau, ohne Spalte o.ä., auf die Implantate (bzw. auf die Multi-Unit-Abutments, falls welche vorgesehen sind).

Eine Einklebehilfe zum Überbrücken von mindestens zwei in einem Kiefer eines Patienten verankerten Implantaten weist Negativformen von Anschlussstücken (Klebekappen) auf, wobei diese Negativformen in der Einklebehilfe derart angeordnet sind, dass sie auf die Klebekappen passen, wenn die Klebekappen auf den Implantaten lösbar fixiert sind. Die Negativformen in der Einklebehilfe sind ferner derart ausgebildet, dass sie einen Spielraum zwischen den Negativformen und den Klebekappen lassen.

Ein System zum Ermitteln der räumlichen Positionen und Orientierungen relativ zueinander von mindestens zwei in einem Kiefer eines Patienten verankerten Implantaten umfasst eine Einklebehilfe wie oben beschrieben und eine Klebekappe für jedes Implantat.

Ein Computerprogramm kann bei Ablauf auf einer Recheneinheit, einem Mikrocontroller, DSP, FPGA oder Computer oder auf einer Mehrzahl davon in einem Netzwerk eine Fräsmaschine oder einen 3D-Drucker derart steuern, dass die Fräsmaschine oder der 3D-Drucker eine Einklebehilfe wie oben beschrieben herstellt.

Eine Vorrichtung zum Herstellen einer Einklebehilfe, wie oben beschrieben, umfasst einen Scanner oder eine Kamera zum Aufnehmen der Positions- und Orientierungsdaten der Implantate; eine Fräsmaschine oder einen 3D-Drucker und ein Computerprogramm wie oben beschrieben. Die Fräsmaschine oder der 3D-Drucker weist dabei eine Steuerung auf, die von dem Computerprogramm derart gesteuert werden kann, dass die Fräsmaschine die Einklebehilfe ausgehend von den Positions- und Orientierungsdaten der Implantate erstellt.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Ein Ausführungsbeispiel ist in der Figur schematisch dargestellt. Im Einzelnen zeigt:

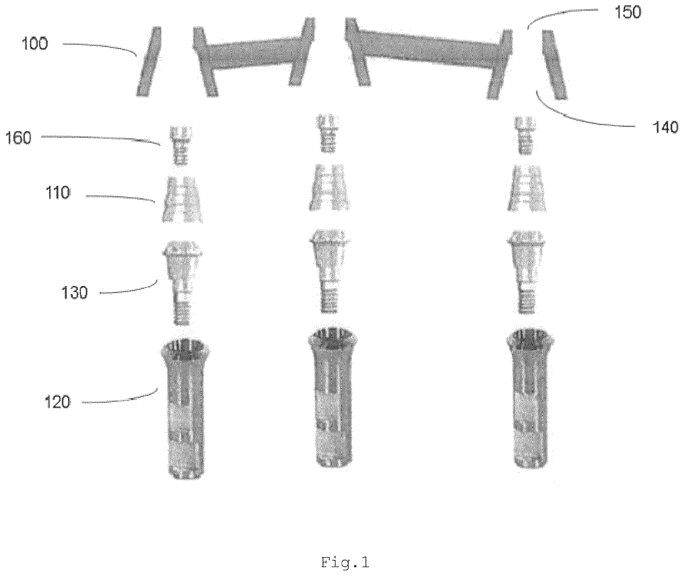

- Fig. 1: eine schematische Darstellung der Teile, die bei einem erfindungsgenmäßen Verfahren verwendet werden.

Wenn eine CAD/CAM basierte Implantatversorgung erstellt wird, dann wird gleichzeitig eine sogenannte Einklebehilfe 100 erstellt, wie sie in Fig. 1 schematisch zu erkennen ist. Diese Einklebehilfe dient dem Zahnarzt dazu, sogenannte Klebekappen 110 im Patientenmund zueinander zu positionieren und mit der Einklebehilfe 100 zu einem Klebeschlüssel zu vereinen. Dieser Klebeschlüssel enthält nun die perfekt zueinander korrelierten lmplantatlagen/-positionen. Mithilfe dieses Klebeschlüssels erstellt der Zahntechniker ein neues Meistermodell mit Labor-Analogen (die Gingiva muss nicht exakt nachgebildet werden). Bei diesem Meistermodell geht es alleine um die Implantatpositionen. Die Positionen und Orientierungen der Laboranaloge in dem neuen Meistermodell entsprechen nun exakt der Situation der Implantate im Patientenmundes und die Übertragungsfehler der Implantatlagen und die Scanfehler sind eliminiert. Im Detail sieht das Vorgehen wie folgt aus:
1. Der Zahnarzt entscheidet sich zusammen mit dem Zahntechniker zu einer lmplantatversorgung auf mehreren Implantaten 120 zur Zementierung auf Multi-Unit-Abutments 130.
2. Der Zahnarzt nimmt einen Abdruck der Patientensituation und schickt diesen zum Labor.
3. Der Techniker erstellt ein Meistermodell mit Labor-Analogen. Dieses Meistermodell enthält systembedingt einen Übertragungsfehler, d.h. die Position und Orientierung der Laboranaloge entsprechen nicht 100% denen der Implantate 120 im Patientenmund.
4. Das Meistermodell wird mit Scanbodys auf den Labor-Analogen gescannt und dadurch digitalisiert. Dadurch kann erneut ein Fehler durch Ungenauigkeit beim Scannen entstehen.
5. Auf dem digitalisierten Modell erstellt der Zahntechniker mittels CAD die Restauration - diese wird aber noch nicht mittels CAM gefräst/geschliffen.
6. Stattdessen wird gleichzeitig die sogenannte Einklebehilfe 100 erstellt. Diese kann ähnlich der definitiven Versorgung aussehen - wichtig ist nur, dass die Einklebehilfe 100 an der Stelle der Implantate eine Negativform 140 von den sogenannten Klebekappen 110 aufweist. Diese Negativform 140 wird mit einem extrem großen Spiel erstellt, und in okklusaler Richtung wird ein großes Loch 150 ausgespart.
7. Die Einklebehilfe 100 wird mitsamt den Klebekappen 110 und Multi-Unit-Abutments 130 an den Zahnarzt geschickt.
8. Die Multi-Unit-Abutments 130 werden im Patientenmund in die Implantate 120 geschraubt.
9. Die Klebekappen 110 werden im Patientenmund auf die Multi-Unit Abutments 130 geschraubt 160.
10. Die Einklebehilfe 100 wird im Patientenmund über die Klebekappen 110 positioniert - durch das extrem große Spiel gibt es keine Passungsprobleme und der Zahnarzt hat genügend Platz zum Hantieren.
11. Die Löcher 150 und die Zwischenräume zwischen Klebekappen 110 und Einklebehilfe 100 werden mit einem passenden dentalen Klebstoff aufgefüllt und dieser wird ausgehärtet. Dadurch hat man nun den Klebeschlüssel mit der perfekten Patientensituation zusammengefügt.
12. Der Klebeschlüssel wird mitsamt den Multi-Unit-Abutments 130 wieder zum Labor geschickt.
13. Der Techniker erstellt nun das zweite Meistermodell (ohne exakten Gingiva-Verlauf). Die Multi-Unit-Abutments 130 werden in den Klebeschlüssel geschraubt 160 (die Multi-Unit-Abutments passen in die Klebekappen 110 in dem Klebeschlüssel). Die Labor-Analoge werden an die Multi-Unit-Abutments 130 im Klebeschlüssel geschraubt. Nun wird eine Gipsbasis ge-gossen, die die Laboranaloge umfasst, und das zweite Meistermodell ist fertig.
14. Der Klebeschlüssel wird vom zweiten Meistermodell gelöst (die Multi-Unit-Abutments verbleiben im Modell).
15. Der Klebeschlüssel kann zerstört werden bzw. die Klebekappen 110 aus dem Schlüssel zur weiteren Verwendung gelöst und gereinigt werden.
16. Nun wird die definitive Restauration mittels CAD/CAM gefertigt - wiederum werden die Negativformen 140 der Klebekappen 110 mit einem Spiel gefertigt (das aber nicht mehr extrem groß sein muss).
17. Gleichzeitig werden die gereinigten Klebekappen 110 auf das zweite Meistermodell (auf die Multi-Unit-Abutments 130) geschraubt.
18. Die Restauration wird nun auf dem zweiten Meistermodell auf die Klebekappen 110 zementiert.

### Glossar

### Abutment, Multi-Unit-Abutment

Abutment bezeichnet das Verbindungsteil zwischen einem Zahnimplantat und der prothetischen Versorgung (den sichtbaren Zahnkronen). Es bildet den sensiblen Übergang durch das periimplantäre Weichgewebe, den Zahnfleischsaum, zur Mundhöhle und zur Implantat-Suprakonstruktion, womit eine Periointegration erreicht werden soll. Üblicherweise sind Abutments aus Titan, Aluminiumoxidkeramik oder aus Zirkondioxidkeramik. Sie können als lösbare oder bedingt bzw. unbedingt lösbare Verbindung konstruiert werden.

### dentaler Klebstoff

Klebstoff für zahnmedizinische Verwendung, d.h. insbesondere für intraorale Verwendung geeignet (gesundheitlich unbedenklich) . Typischerweise handelt es sich um einen schnell härtenden Zweikomponentenkleber.

### Einklebehilfe

Verbindungsstück, das hilfsweise mindestens zwei Implantate überbrückt. Dabei handelt es sich nicht um Zahnersatz, die genaue äußere Form des Verbindungsstücks spielt daher keine Rolle. Die Einklebehilfe besteht in der Regel aus PMMA-Kunststoff und weist an den entsprechenden Stellen Negativformen mit großem Spiel für Anschlussstücke (Klebekappen) auf.

### Implantat

Ein Zahnimplantat, hier auch einfach "Implantat" genannt, ist ein in den Kieferknochen eingesetztes alloplastisches Konfektionsteil. Durch ihre Verwendbarkeit als Träger von Zahnersatz übernehmen Zahnimplantate die Funktion künstlicher Zahnwurzeln. Hierzu werden sie entweder mittels Schraubgewinde in den Kieferknochen eingedreht oder eingesteckt. Sie verbinden sich innerhalb von 3 bis 6 Monaten mit dem umgebenden Knochen zu einer festen, äußerst belastungsfähigen Trägereinheit (Osseointegration). Typischerweise bestehen Zahnimplantate aus Titan. (Nach http://de.wikipedia.org/wiki/Zahnimplantat) .

### Klebekappen

Bei Klebekappen handelt es sich um Anschlussstücke, welche in definierter und reproduzierbarer Weise an den Implantaten (bzw. an ggf. vorhandenen Multi-Unit-Abutments) lösbar fixiert werden können. Diese haben üblicherweise eine konische Form und ermöglichen es, Teile anzukleben (also nicht lösbar) und anschließend zusammen mit den Klebekappen von den Implantaten (oder Multi-Unit-Abutments) zu lösen.

### Klebeschlüssel

Unter Klebeschlüssel ist ein zusammengesetztes Teil zu verstehen, das aus einer Einklebehilfe und den daran festklebenden Klebekappen besteht.

### Labor-Analog

Preisgünstiges Teil, das im Meister-Modell an Stelle eines teuren Implantats Verwendung findet. Die Anschlussgeometrie für den Zahnersatz stimmt mit der des Implantats überein, der sonstige Aufbau und das Material aber nicht.

### Meister-Modell

Modell des Gebisses eines Patienten (bzw. eines Teils davon), das ein Zahntechniker anfertigt, um darauf eine zu erstellende Restauration anzupassen. Das Modell wird typischerweise mit Hilfe eines vom Zahnarzt angefertigten Abdrucks in Gips gegossen. Es sind jedoch auch andere Materialien denkbar - das Meister-Modell kann ggf. sogar rein virtuell vorliegen.

### Restauration, Versorgung, Zahnersatz

Die Begriffe Restauration, Versorgung und Zahnersatz werden synonym verwendet. Hierbei handelt es sich um Zahnprothesen, die z.B. auf Implantaten fixiert werden können und ein unvollständiges bzw. beschädigtes Gebiss vervollständigen sollen.

## Patentansprüche

1. Verfahren zum Ermitteln der räumlichen Positionen und Orientierungen relativ zueinander von mindestens zwei in einem Kiefer eines Patienten verankerten Implantaten (120) mit folgenden Schritten:
1.1 Herstellen einer Einklebehilfe (100), die die Implantate (120) überbrückt;
1.1.1 wobei die Einklebehilfe (100) derart ausgebildet wird, dass die Einklebehilfe Negativformen (140) von Klebekappen (110) aufweist;
1.1.2 wobei die Negativformen (140) in der Einklebehilfe (100) derart angeordnet werden, dass sie auf die Klebekappen (110) passen, wenn die Klebekappen (110) auf den Implantaten (120) lösbar fixiert sind;
1.1.3 wobei die Negativformen (140) in der Einklebehilfe (100) ferner derart ausgebildet werden, dass sie einen Spielraum zwischen den Negativformen (140) und den Klebekappen (110) lassen;
1.2 die Klebekappen (110) werden im Kiefer des Patienten auf den mindestens zwei Implantaten (120) lösbar fixiert;
1.3 die Einklebehilfe (100) wird im Patientenmund über die Klebekappen (110) positioniert;
1.4 der Spielraum zwischen den Klebekappen (110) und den Negativformen (140) wird mit dentalem Klebstoff aufgefüllt;
1.5 der Klebstoff wird ausgehärtet;
1.6 die Klebekappen (110) werden von den Implantaten (120) gelöst; und
1.7 die Einklebehilfe (100) mit den an ihr klebenden Klebekappen (110) wird aus dem Patientenmund entfernt, wobei zuvor folgende Schritte durchgeführt werden:
1.8 Erstellen eines Meister-Modells mit Labor-Analogen oder Implantaten (120);
1.9 Fixieren von Scanbodys auf den Labor-Analogen oder Implantaten (120);
1.10 Scannen des Meister-Modells; und
1.11 Erstellen eines virtuellen dreidimensionalen Modells aus den gescannten Daten;
1.12 wobei eine Einklebehilfe (100) ausgehend von dem virtuellen, dreidimensionalen Modell mittels CAD/CAM erstellt wird.

2. Verfahren zum Ermitteln der räumlichen Positionen und Orientierungen relativ zueinander von mindestens zwei in einem Kiefer eines Patienten verankerten Implantaten (120) mit folgenden Schritten:
2.1 Herstellen einer Einklebehilfe (100), die die Implantate (120) überbrückt;
2.1.1 wobei die Einklebehilfe (100) derart ausgebildet wird, dass die Einklebehilfe Negativformen (140) von Klebekappen (110) aufweist;
2.1.2 wobei die Negativformen (140) in der Einklebehilfe (100) derart angeordnet werden, dass sie auf die Klebekappen (110) passen, wenn die Klebekappen (110) auf den Implantaten (120) lösbar fixiert sind;
2.1.3 wobei die Negativformen (140) in der Einklebehilfe (100) ferner derart ausgebildet werden, dass sie einen Spielraum zwischen den Negativformen (140) und den Klebekappen (110) lassen;
2.2 die Klebekappen (110) werden im Kiefer des Patienten auf den mindestens zwei Implantaten (120) lösbar fixiert;
2.3 die Einklebehilfe (100) wird im Patientenmund über die Klebekappen (110) positioniert;
2.4 der Spielraum zwischen den Klebekappen (110) und den Negativformen (140) wird mit dentalem Klebstoff aufgefüllt;
2.5 der Klebstoff wird ausgehärtet;
2.6 die Klebekappen (110) werden von den Implantaten (120) gelöst; und
2.7 die Einklebehilfe (100) mit den an ihr klebenden Klebekappen (110) wird aus dem Patientenmund entfernt, wobei zuvor folgende Schritte durchgeführt werden:
2.8 Fixieren von Scanbodys auf den Implantaten (120) im Mund des Patienten;
2.9 Durchführen eines Intra-Oral-Scans; und
2.10 Erstellen eines virtuellen dreidimensionalen Modells aus den gescannten Daten;
2.11 wobei eine Einklebehilfe (100) ausgehend von dem virtuellen, dreidimensionalen Modell mittels CAD/CAM erstellt wird.

3. Verfahren nach einem der vorhergehenden Ansprüche, **dadurch gekennzeichnet, dass** der Spielraum zwischen den Klebekappen (110) und den Negativformen (140) zwischen 100 und 300 µm beträgt.

4. Verfahren nach einem der vorhergehenden Ansprüche, **dadurch gekennzeichnet, dass** die Negativformen (140) in der Einklebehilfe (100) in okklusaler Richtung jeweils ein Loch (150) zum Aufnehmen des dentalen Klebstoffs und zum Lösen der Klebekappen (110) aufweisen.

5. Verfahren nach einem der vorhergehenden Ansprüche, **dadurch gekennzeichnet, dass** auf den Implantaten (120) Multi-Unit-Abutments (130) lösbar fixiert sind, an denen ihrerseits die Klebekappen (110) lösbar fixiert werden können.

6. Verfahren zum Erstellen eines Zahnersatzes, der im Patientenmund mittels mindestens zweier bereits vorhandener Implantate (120) verankert werden soll, mit folgenden Schritten:
6.1 Ermitteln der räumlichen Positionen und Orientierungen der mindestens zwei bereits vorhandenen Implantate (120) relativ zueinander;
6.1.1 wobei der Schritt des Ermittelns der räumlichen Positionen und Orientierungen der Implantate (120) nach einem der vorhergehenden Ansprüche durchgeführt wird; und
6.2 Erstellen des Zahnersatzes ausgehend von den ermittelten Positionen und Orientierungen.

## Claims

1. A method for ascertaining the spatial positions and orientations relative to one another of at least two implants (120) anchored in the jaw of a patient, comprising the following steps:
1.1 producing an adhesive bond aid (100) which bridges the implants (120);
1.1.1 wherein the adhesive bond aid (100) is designed such that the adhesive bond aid has negative moulds (140) of adhesive caps (110);
1.1.2 wherein the negative moulds (140) are arranged in the adhesive bond aid (100) such that they fit on the adhesive caps (110) when the adhesive caps (110) are affixed to the implants (120) in a detachable manner;
1.1.3 wherein the negative moulds (140) in the adhesive bond aid (100) are further designed such that there is a clearance between the negative moulds (140) and the adhesive caps (110);
1.2 the adhesive caps (110) are affixed to the at least two implants (120) in the jaw of the patient in a detachable manner;
1.3 the adhesive bond aid (100) is positioned over the adhesive caps (110) in the patient's mouth;
1.4 the clearance between the adhesive caps (110) and the negative moulds (140) is filled with dental adhesive;
1.5 the adhesive is cured;
1.6 the adhesive caps (110) are detached from the implants (120); and
1.7 the adhesive bond aid (100), with the adhesive caps (110) adhering to it, is removed from the patient's mouth, wherein the following steps are first performed:
1.8 creating a master model with laboratory analogues or implants (120);
1.9 affixing scan bodies on the laboratory analogues or implants (120);
1.10 scanning the master model; and
1.11 creating a virtual three-dimensional model from the scanned data;
1.12 wherein an adhesive bond aid (100) is created by means of CAD/CAM based on the virtual three-dimensional model.

2. The method for ascertaining the spatial positions and orientations relative to one another of at least two implants (120) anchored in the jaw of a patient, comprising the following steps:
2.1 producing an adhesive bond aid (100) which bridges the implants (120);
2.1.1 wherein the adhesive bond aid (100) is designed such that the adhesive bond aid has negative moulds (140) of adhesive caps (110);
2.1.2 wherein the negative moulds (140) are arranged in the adhesive bond aid (100) such that they fit on the adhesive caps (110) when the adhesive caps (110) are affixed to the implants (120) in a detachable manner;
2.1.3 wherein the negative moulds (140) in the adhesive bond aid (100) are further designed such that there is a clearance between the negative moulds (140) and the adhesive caps (110);
2.2 the adhesive caps (110) are affixed to the at least two implants (120) in the jaw of the patient in a detachable manner;
2.3 the adhesive bond aid (100) is positioned over the adhesive caps (110) in the patient's mouth;
2.4 the clearance between the adhesive caps (110) and the negative moulds (140) is filled with dental adhesive;
2.5 the adhesive is cured;
2.6 the adhesive caps (110) are detached from the implants (120); and
2.7 the adhesive bond aid (100), with the adhesive caps (110) adhering to it, is removed from the patient's mouth, wherein the following steps are first performed:
2.8 affixing scan bodies to the implants (120) in the patient's mouth;
2.9 performing an intra-oral scan; and
2.10 creating a virtual three-dimensional model from the scanned data;
2.11 wherein an adhesive bond aid (100) is created by means of CAD/CAM based on the virtual three-dimensional model.

3. The method according to any one of the preceding claims, **characterised in that** the clearance between the adhesive caps (110) and the negative moulds (140) is between 100 and 300 µm.

4. The method according to any one of the preceding claims, **characterised in that** the negative moulds (140) in the adhesive bond aid (100) respectively have a hole (150) in the occlusal direction for receiving the dental adhesive and for releasing the adhesive caps (110).

5. The method according to any one of the preceding claims, **characterised in that** multi-unit abutments (130) are affixed to the implants (120) in a detachable manner, to which the adhesive caps (110) can be releasably affixed.

6. A method for creating a dental prosthesis that is to be anchored in the patient's mouth by means of at least two already existing implants (120), comprising the following steps:
6.1 ascertaining the spatial positions and orientations of the at least two already existing implants (120) relative to one another;
6.1.1 wherein the step of ascertaining the spatial positions and orientations of the implants (120) is performed according to any one of the preceding claims; and
6.2 creating the dental prosthesis based on the ascertained positions and orientations.

## Revendications

1. Procédé pour déterminer les positions et orientations spatiales l'une par rapport à l'autre d'au moins deux implants (120) ancrés dans la mâchoire d'un patient, comprenant les étapes suivantes :
1.1 produire un auxiliaire de collage (100) qui relie les implants (120) ;
1.1.1 dans lequel l'auxiliaire de collage (100) est conçu de telle sorte que l'auxiliaire de collage présente des moules négatifs (140) de capuchons de collage (110) ;
1.1.2 dans lequel les moules négatifs (140) sont disposés dans l'auxiliaire de collage (100) de sorte qu'ils s'adaptent sur les capuchons de collage (110) lorsque les capuchons de collage (110) sont fixés de manière amovible sur les implants (120) ;
1.1.3 dans lequel les moules négatifs (140) sont en outre formés dans l'auxiliaire de collage (100) de manière à laisser un jeu entre les moules négatifs (140) et les capuchons de collage (110) ;
1.2 les capuchons de collage (110) sont fixés de manière amovible dans la mâchoire du patient sur les au moins deux implants (120) ;
1.3 l'auxiliaire de collage (100) est positionné dans la bouche du patient sur les capuchons de collage (110) ;
1.4 la marge entre les capuchons de collage (110) et les moules négatifs (140) est remplie d'adhésif dentaire ;
1.5 l'adhésif est durci ;
1.6 les capuchons de collage (110) sont détachés des implants (120) ; et
1.7 l'auxiliaire de collage (100) avec les capuchons de collage (110) qui y adhèrent est retiré de la bouche du patient, les étapes suivantes étant préalablement effectuées :
1.8 création d'un modèle maître avec analogues ou implants de laboratoire (120) ;
1.9 fixation de corps de balayage sur les analogues ou implants de laboratoire (120) ;
1.10 numérisation du modèle maître ; et
1.11 création d'un modèle virtuel en trois dimensions à partir des données numérisées ;
1.12 dans lequel un auxiliaire de collage (100) est créé sur la base du modèle virtuel en trois dimensions utilisant CFAO.

2. Procédé pour déterminer les positions et orientations spatiales l'une par rapport à l'autre d'au moins deux implants (120) ancrés dans la mâchoire d'un patient, comprenant les étapes suivantes :
2.1 produire un auxiliaire de collage (100) qui relie les implants (120) ;
2.1.1 dans lequel l'auxiliaire de collage (100) est conçu de telle sorte que l'auxiliaire de collage présente des moules négatifs (140) de capuchons de collage (110) ;
2.1.2 dans lequel les moules négatifs (140) sont disposés dans l'auxiliaire de collage (100) de sorte qu'ils s'adaptent sur les capuchons de collage (110) lorsque les capuchons de collage (110) sont fixés de manière amovible sur les implants (120) ;
2.1.3 dans lequel les moules négatifs (140) sont en outre formés dans l'auxiliaire de collage (100) de manière à laisser un jeu entre les moules négatifs (140) et les capuchons de collage (110) ;
2.2 les capuchons de collage (110) sont fixés de manière amovible dans la mâchoire du patient sur les au moins deux implants (120) ;
2.3 l'auxiliaire de collage (100) est positionné dans la bouche du patient sur les capuchons de collage (110) ;
2.4 la marge entre les capuchons de collage (110) et les moules négatifs (140) est remplie d'adhésif dentaire ;
2.5 l'adhésif est durci ;
2.6 les capuchons de collage (110) sont détachés des implants (120) ; et
2.7 l'auxiliaire de collage (100) avec les capuchons de collage (110) qui y adhèrent est retiré de la bouche du patient, les étapes suivantes étant préalablement effectuées :
2.8 fixation des corps de balayage sur les implants (120) dans la bouche du patient ;
2.9 réalisation d'un balayage intra-oral ; et
2.10 création d'un modèle virtuel en trois dimensions à partir des données numérisées ;
2.11 dans lequel un auxiliaire de collage (100) est créé sur la base du modèle virtuel en trois dimensions utilisant CFAO.

3. Procédé selon l'une des revendications précédentes, **caractérisé en ce que** le jeu entre les capuchons de collage (110) et les moules négatifs (140) est compris entre 100 et 300 µm.

4. Procédé selon l'une des revendications précédentes, **caractérisé en ce que** les moules négatifs (140) dans l'auxiliaire de collage (100) ont chacun un trou (150) dans la direction occlusale pour recevoir l'adhésif dentaire et pour libérer les capuchons de collage (110).

5. Procédé selon l'une des revendications précédentes, **caractérisé en ce que** des butées à unités multiples (130) sont fixées de manière amovible sur les implants (120), sur lesquelles à leur tour les capuchons de collage (110) peuvent être fixés de manière amovible.

6. Procédé pour créer une prothèse dentaire, qui doit être ancrée dans la bouche du patient en utilisant au moins deux implants déjà existants (120), comportant les étapes suivantes :
6.1 déterminer les positions et orientations spatiales des au moins deux implants déjà existants (120) l'un par rapport à l'autre ;
6.1.1 dans lequel l'étape de détermination des positions et orientations spatiales des implants (120) est réalisée selon l'une des revendications précédentes ; et
6.2 création de la prothèse dentaire sur base des positions et orientations déterminées.
